(19) Europäisches Patentamt
European Patent Office
Office européen des brevets

(11) **EP 2 692 701 B1**

(12) **EUROPEAN PATENT SPECIFICATION**

(45) Date of publication and mention of the grant of the patent:
**01.06.2016 Bulletin 2016/22**

(51) Int Cl.:
*C02F 9/00* [(2006.01)]  *C02F 1/00* [(2006.01)]
*C02F 3/30* [(2006.01)]  *C02F 1/52* [(2006.01)]
*C02F 11/04* [(2006.01)]  *C02F 3/32* [(2006.01)]
*C02F 11/12* [(2006.01)]  *B82Y 30/00* [(2011.01)]

(21) Application number: **12178764.2**

(22) Date of filing: **31.07.2012**

(54) **Process and plant for wastewater treatment and energy generation**

Verfahren und Anlage zur Abwasserbehandlung und Energieerzeugung

Procédé et installation pour traitement des eaux usées et production d'énergie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2014 Bulletin 2014/06**

(73) Proprietor: **Rus, Gabriel Marius**
**820004 Tulcea (RO)**

(72) Inventor: **Rus, Gabriel Marius**
**820004 Tulcea (RO)**

(56) References cited:
**WO-A2-2009/134402    GB-A- 2 472 183**
**US-A1- 2009 250 393**

• M Pumera: "Graphene-based nanomaterials for energy storage", Energy Environ. Sci., 8 October 2010 (2010-10-08), pages 668-674, XP002685087, DOI: 10.1039/C0EE00295J Retrieved from the Internet: URL:http://pubs.rsc.org/en/content/article pdf/2010/ee/c0ee00295j [retrieved on 2012-10-11]
• B.C. Wood et al: "Methane and carbon dioxide adsorption on edge-functionalized graphene: Acomparative DFT study", , 6 March 2012 (2012-03-06), pages 1-12, XP002685088, Retrieved from the Internet: URL:http://arxiv.org/pdf/1203.1351.pdf [retrieved on 2012-10-11]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention concerns a procedure and a installation. The installation is a Power Plant (PP) and a Waste Water Treatment Plant (WWTP) because it generates electrical power as long as it treats the wastewater in accordance with NTPA011 standard for agglomerations over 100.000 population equivalent. The procedure described is scalable from 280 population equivalent to 200,000 population equivalent (municipal waste water) and the single draw-back for scaling over 200.000 population equvalent is the large area required.

The most important object of the installation is the harvested free water surface constructed wetland with greenhouse (FWSG).

Free water surface constructed wetlands (FWS) are artificial wastewater treatment systems consisting of shallow ponds which have been planted with aquatic plants, and which rely upon natural microbial, biological, physical and chemical processes to treat wastewater. Free water surface constructed wetlands are used for wastewater treatment for a couple of decades. They have synthetic liners, and engineered structures to control the flow direction, liquid detention time and water level. Free water surface constructed wetlands closely resemble natural wetlands in appearance and function, with a combination of open-water areas, floating vegetation and varying water depths.

An important disatvantage for FWS is that is temperature dependend and the main disatvantage of conventional activated sludge (CAS) WWTP's is that of operational costs, especially the energy costs associated with the aeration.

The procedure and the invention combines FWS and (CAS) WWTP and eliminates the disatvantages mentioned before.

We shall present mainly the facts that make the FWSG different from traditional FWS's and briefly the principles for the processes in FWS (United States Environmental Protection Agency, Manual Constructed Wetlands Treatment of Municipal Wastewaters, September 2000, page 12, 81-84) that are unchaged in FWSG. We also mention objects that are part of conventional activated sludge (CAS) WWTP's. We shall not explain some of them any further.

The procedure consists of starting up the collection of the wastewater in May two days before new moon, from a pretreatment stage through a pumping station or gravitationally, and treating it in a three zone harvested free water surface constructed wetland with greenhouse with air temperatures between 13-40 °C and water temperatures between 10-32 °C, where, in the first zone is treated by *Eichhornia crassipes* in a fully vegetated zone, in the second, is treated by *Myriophyllum spicatum* in an open water zone and in the third by *Eichhornia crassipes* in a fully vegetated zone, and the water goes further into a 0,8 mm mesh filter which has the role of retaining seeds, meanwhile 25% of the first and third zone are harvested each 29.53 days, two days before full moon, by mechanichal harvesters and along with wastewater, fed through a chopper pump or gravitationally, into a anaerobic digester from which the biogas is reformed and stored into graphene based materials, so it can be used for heating the greenhouse with a low-intensity radiant heating system, and the digesters with a boiler, the reminder of the hydrogen produced beeing used for producing energy.

The installation is made from a square pyramidal frame with a square side to height ratio equal to 1.572 and with the design water level at one third of the height measured from the base, in which there are one or more trains, each made of three water cells or ponds with the depths of 0.43 meters, 1.55 meters and 0.43 meters, maintained with an adjustable outlet structure, with a train width of 10-11.55 meters and a train lenght of 90-95 meters. For harvesting the plants in cell 1 and 3 there are hatches and ducts which are conected to an anaerobically digester which works at 36-38°C, with a digestion time is 20-28 days, providing biogas which is reformed in a Glidarc® reactor, the hydrogen provided this way being stored in graphene based material and used for heating the digester with a boiler and the greenhouse which covers the cells with a low-intensity radiant heating system.

The procedure and the installation, which consits of one or more FWSGs, produces energy, which is the main purpose and advantage of the invention. Antother advantage of FWSG is due to temperature dependend processes that are not slowed down like in FWS's and CAS WWTP's which are climate dependent. Another advantage is the fact that the average maximum monthly flow ($Q_{max}$) is two times bigger than the average flow of FWSG ($Q_{ave}$) and solves most of the overloadings of the wastewater treatment plant due to inflow/infiltration. At last, another advantage is the additional uptake of ammonia, nitrate and phosphorus due to harvesting, process which occurs with two mechanisms one at $Q_{ave.}$ and one at $Q_{max}$.

Embodiments of the present invention with now be described, by way of example, with reference to the accompanying drawings in which:

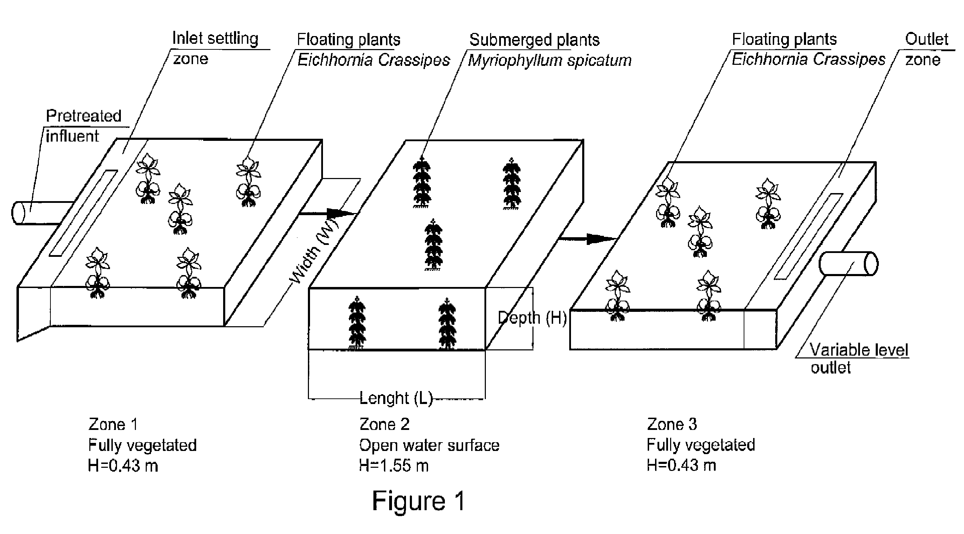

Figure 1 presents a schematic diagram of FWSG's zones or cells.

Figure 2 presents a block diagram of the installation based on FWSG.

Figure 3 is a sideview of a hatch and duct used for harvesting.

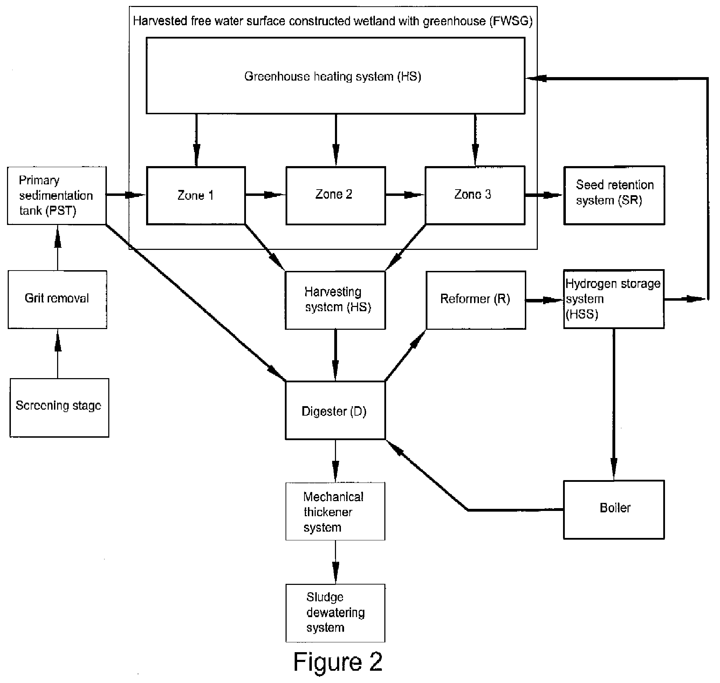

The zone one's influent is pretreated in an in a primary sedimentation tank in order to remove minimum 50% of the suspended solids and minimum 25% of the biochemical oxygen demand (BOD). The pretreatment may include before the stage mentioned above a grit removal stage and a screening stage (Figure 2), unless the FWSG is very small in size.

The first zone is a fully vegetated and anaerobic area were the the flocculation and sedimentation are the dominant processes. The BOD, total suspended solids (TSS), nitrogen (N), phosphorus (P) and pathogens levels are decreasing. A supplementary decrease of ammonia, nitrate and phosphorus, that occurs only in FWSG is due to plant uptake. This process occurs because the harvesting causes the apparition of new plants which have a higher nitrate and phophorus uptake.

In zone 2, which is primarily open-water, the natural reaeration processes are supplemented by submerged macrophytes during daylight periods to elevate dissolved oxygen in order to oxidize carbonaceous compounds (BOD) to sufficiently low levels to facilitate nitrification of the $NH_4$-N to $NO_3$-N. So, in zone 2 the dominant process is nitrification. The primary goal of the open-water zone is to provide dissolved oxygen. The BOD and pathogens levels are decreasing. In FWSG the role of submerged macrophytes has been substatially increased by transforming a process that takes place horizontally in one that also takes place vertically. Consequently the depth of zone 2 has been increased and the level of oxygen transferred to the wetland due to photosyntesis is limited only by the attenuation of light by the water column (although *Myriophyllum spicatum* can develop stems up to 3 meters long). Another difference is the increased water temperature for this process that can be impaired when water temperatures are reduced below 10°C.

In zone 3, which is a fully vegetated and anaerobic area, the dominant processes are denitrification and sedimentation. Denitrifying bacteria perform only under anaerobic conditions and best when attached to large surface areas like plant's roots. The BOD, TSS, nitrogen N, P and pathogens levels are decreasing. A singnificant decrease of ammonia, nitrate and phosphorus, that occurs only in FWSG is due to plant uptake. Another difference is the increased water temperature for denitrification which can be impaired when water temperatures are reduced below 10°C.

*Eichhornia crassipes* has a pantropical distribution and it's growth stops at 10°C. Consequently the minimum air temperature in the greenhouse is 13°C. The maximum air temperatures are maintained under 40°C. Water temperature is very important and it's minimum value should be 10°C, and the goal is not to lower this value rather than increasing it. The die-back starts for *Myriophyllum spicatum* at temperatures below 10°C. This is why we choose to have as a pretreatment stage a primary sedimentation tank rather than a large oxidation/stabilisation pond.

The main characteristics of *Eichhornia crassipes* are the ability to grow in waters rich in macronutrients and the high production of biomass. The main characteristics of *Myriophyllum spicatum* are that is a good water oxygenator, has the ability of inhibitig algal bloom such as *Microcystis aeruginosa* which can occur in zone 2, and the ability to grow in water rich with macronutrients. Both species are invasive, create dense mats, inhibit native plants and grow in slow moving water.

The harvesting moment is two days before full moon because of the connection that exists between the synodic month and the level of cytokinin in plants. As cytokinin induces shooting buds, it means that for maximizing the amount of biomass the harvesting should be done at each 29.53 days. The surfaces that are harvested are 25% of zone 1 and 25% of zone 3. This means that if the plants mat is moving with the water at each 118 days the entire surface of zone 1 and 3 is made by new plants. This period is equal with the growing cycle of *Eichhornia crassipes* which double it's covered surface every 24 days but continues to grow until the 120-th day.

The average flow of FWSG ($Q_{ave}$) is two times smaller than the average maximum monthly flow ($Q_{max}$). A pumping station maintains the flow at $Q_{max}$ if the inflow is greater. The specific areas are: 1.814 square meters/population equivalent for zone 1, 0.339 square meters/population equivalent for zone 2 and 1.067 square meters/population equivalent for zone 3. The zone depths at average flow are 0.43 meters for zone 1, 0.43 meters for zone 3 and 1.55 meters for zone 2. The hydraulic retention time (HRT) at average flow is 3.924 days for zone 1, 2.624 days for zone 2 and 2.308 days for zone 3. The HRT at average maximum monthly flow is 1.962 days for zone 1, 1.312 days for zone 2 and 1.154 days for zone 3. For the above values we assumed a rectangular parallelipiped as the shape for each zone. The cross-sectional shape of the zones may be isosceles trapezoid, in which case the area of zone 1 and 3 may be with maximum 4,3% greater and the base area of zone 3 may be with maximum 15.5 % smaller. The cross-sectional areas, the volumes, the depths and HRTs remain the same.

We can conclude that the HRT at $Q_{max}$ for zone 1 is less than 2 days. Beeing greater would be pointless because anaerobic conditions will not remove any significant soluble constiuents. The HRT at Qave for zone 2 is less than 3 days in order to avoid algal blooms. In zone 1, at HRT=3.924 days ($Q_{ave}$), nitrate and P uptake is greater than in an unharvested FWS (30 mg/day/shoot for nitrate and the same for P), but still insgnificant. In zone 3, at HRT=2.309 days ($Q_{ave}$), nitrate and P uptake is significant (75 mg/shoot/day for N and 45 mg/shoot/day for P). This arrangement changes at $Q_{max}$ when in zone 1 the nitrate and P uptake becomes significant. The ammonia, nitrate and P uptake lasts about 10 days for each new shoot.

Three cells (one for each zone) arranged in paralel trains may be used. The minimum value is two trains. A single train is suitable only for very small FWSG's. For large FWSG's more than two trains can be used in order to offer operational flexibility.

The cell may be made from soil. For calculus, the cross-sectional shape of the zone or cell was assumed to be a rectangle. It may also be an isosceles trapezoid. The bottom soil for all cells must be compacted at opimal moisture content. On the embankment the compaction will be in orizontal layers. The embankment may be made using geosinthetic rerinforced soil technology. In the case of multiple trains and trapezoid cross-section there is an additional greenhouse area. The dike at crest may be 1.1-1.525 meters wide. The dike slope is 45° or greater. The liner material may be High-density polyethylene (HDPE) and may be situated on the perimeter of cross sectional water area, and not under the ground, especially for zone 1 and 3. In this case the HDPE should be black and the soil should be treated to avoid plant bloom under the liner. In this way the mat of *Eichhornia crassipes* can slide easily along the dike walls, moving towards the outlet after each harvesting. This arrangement of the liner is also convenient for maintenance operations (detrital plant material removal). Soil substrate for zone 2 should be loamy or sandy, well loosened and at least 15 cm deep.

The aspect ratio (or lenght to width ratio) of each cell or zone may range from 3:1 to 5:1. Each cell should be completely drainable. Flexible intercell piping to allow for required maintenance. Existing site grade must be used, if possible, for reducing pumping costs.

The inlet and outlet structures have the role of uniformizing the inflow across the width of the inlet and to uniformly collect the outflow across the width of the outlet. An inlet settling zone may be required where pretreatment fails to retain settleable particulates. By adjusting the outlet structure, the hydraulic retention time and the water depth and can be increased or decreased. The structures may be perforated pipes connected to a manifold system by a flexible tee joint, which allows the pipes to be adjusted up or down. The structures may be also multiple weirs or drop boxes. For inhibiting plant growth the inlet and outlet structures may be followed or preceded by a 0.3-0.5 meters wide wire mesh gabion (for large FWSG's). Flow measuring devices may be installed at the inlet of each cell of FWSG. The submerged outlet manifolds must be connected to a level control device that permits the operator to adjust the water depth. The process may be automated. The inlet and outlet structures increase the greenhouse area.

Vegetation establishment is necessary for successful performance of FWSG. Wetland plants can be purchased from nurseries, collected in the wild, or grown this specific purpose. For large FWSG's commercial seedlings may be the most cost-effective alternative. *Eichhornia crassipes* reproduces vegetatively and sexually. For vegetative reproduction the surface covered doubles each 24 days. *Myriophyllum spicatum* reproduces by seeding in the substrate, the buds from the upper part of the plant (after removing the inferior leafs).

Planting of *Eichhornia crassipes* begins in March after the average air temperature in the greenhouse has been over 13°C for three consecutive days. The water temperature must be around 10°C. The amount of *Eichhornia crassipes* needed until start up coresponds to 17-25% from the entire surface. This amount may be obtained by germination. For the the initial growth period a cleaner water source may be used. For large FSWG's it may be wastewater dilluted with storm water or snow melting water or water from the natural effluent, and for small FSWG's it may be from another sources. The water depth can be increased gradually as the plant grows. Greenhouse heating system may be used for raising the air and water temperature.

Planting *Myriophyllum spicatum* begins also in March. The water temperature must be minimum 10°C. For this purpose for larger FWSG's, a cell may be used (with very low water depth) for heating the water. Conseqently the planting moment may be a little later than zone 1 and 3. A cleaner surce also may be used and after planting the water depth can be increased gradually. Greenhouse heating system may be used for raising the air and water temperature.

Imediately after starting-up, the root system of the plants must be fully developped. This is very important especially for the zone 1 and 3 where bacteria attaches to the roots. In zone 2 also, the vegetation and the root system must be fully developped. Otherwise the full functionallity of the FWSG may be reached only after a year. This is why, the start-up is made in May, two days before new moon, because of the conection betwen auxine and the synodic month. Auxine induces root formation. At start-up the water level must be gradually raised to the design level.

After zone 3 water circuit outflows the FWSG and enters the the seed retention system (SR). SR consist of two cross-sectional mesh brass opening filters. The mesh-brass openings must be 0.8 mm or less. Both must have a set of pipe sections, at small distance downstream, for backwashing with FSSG's efluent prelevated after the second filter.

The greenhouse area is determined by the areas of all cells, dikes and inlet/outlet structures. Consequently the greenhouse area is 1,1-1.3 times greater the the cells total area. The greenhouse aspect ratio (or lenght to width ratio) is from 2:1 to 30:1. In order to get maximum exposure, the greenhouse may be aligned (if possible) to cardinal points: the inlet structure to the south and the outlet structure to the north or viceversa, so as the lenght of greenhouse runs south-north and the width runs east-west.

The greenhouse may have compartirned roof. In this case it's shape may be a part of a cilinder or a triangular prism. The greenhouse compartments may coincide with FWSG's trains.

The greenhouse covering material or glazing may be Polyethylene, glass, Fiberglass-reinforced plastic, Acrylic, Impact modified acrylic, or other material. The glazing must have a high transmittance (light transmission) and thermal resistance (R-value). The end walls and gable ends must have a high thermal resistance (R-value).

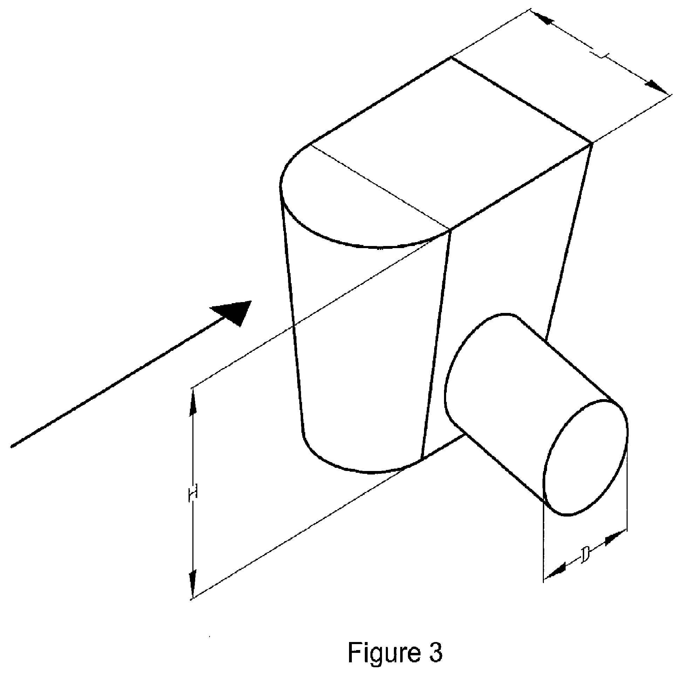

The harvesting system (HS) consists of two mechanchal harversters that combine the functionality of dredges with rakes. They float and are proppeled on the water, cut the mat of plants and trasport it into a mesh container and may also chop the plants. The mesh openings may be 2-4 cm. The container is a bascule for the purpose of filling the two hatches situated in zone 1 and 3, at harvesting limit (situated at 25% of the area of zone 1, respectively zone 3, measured from the outlet to the inlet). The hatch level is 15-30 centimeters over the FWSG's design level. The hatch cross section is a square with the sides equal to the container width (L), with a round section in order to ease the plants movement (Figure 3). The cross section may also have a trapezoidal middle part for further reducing friction. The round section may be coated with a material with low friction coefficient, allowing the plants to slide. The hatch height (H) is 0.8-1.5 meters. After surpassing the cell's limit the two pipes coming from the hatch, converge. The harvesting stops each time the hatch is full with plants. After this moment the pipes are flooded with wastewater from their respective cells and a chopper pump or gravitation, transports the wastewater with the plants to the digester. The wastewater is necessary for initiation of the digestion process. In case there is more than one train there are two mains running at the harvesting limit under the hatches, perpendicular to the trains. After surpassing the cell's limit the pipe from the hach converges with the main. After collecting all the haches the two mains converge. In this case the pipes are flooded after all hatches are full with plants. The entire harvesting process may be automated (including the routes of the harvesters).

The anaerobic digester's (D) working temperature is 36-38°C. For heating the sludge and the plants heat-exchangers are used. There may be two digesters and two heat exchangers. The sludge must be mixed for attaining an uniform temperature. The digestion time is 20-28 days. The digester's walls must have a high thermal resistance (R-value). The heat exchangers are connected to a boiler running on hydrogen.

After the digester the sludge may be treated further in a mechanical thickener and after that in a sludge dewatering system.

The reformer (R) may a be Glidarc® reactor. The reformer may have also two pretreatment installations for removing $H_2S$ and siloxanes.

The hydrogen that results from the reformer is stored in the hydrogen storage system (HSS), in graphene based materials: carbon nanotubes, fuellrene, or layered graphene.

The FWSG heating system (HS) has the role of maintaining the temperature between 13°C and 13.5°C in the winter. HS consists of a low-intensity radiant heating system which emits electromagnetic radiation with a wavelenght between 2,000 and 10,000 nm. The greenhouse heating system runs on hydrogen. The heaters create a mixture of gas and air and burn it in a heat exhanger tube made of aluminized steel, steel-titanium alloy or porcelain coated steel. The tube's surface temperature ranges between 480°C and 595°C. The heaters have a long exchanger tube which may have a single burner and an I shape or multiple burners and U shape. The second option has the advantage of a uniform heat distribution is over the heated rectangular surface, because the tube's surface is reheated. Gutter connected compartments are the easiest to equip because each one acts like a separate heating zone without any separating curtain.

The maximum length of a greenhouse compartment is given by the heating system. If the shape is rectangle, but the dimensions are bigger, an even number of the U shape heaters is customized in multiple branches positioned head to head for an even heat distribution. Greenhouses of 90 m length can be heated this way. At width of 10 m for each zone, the aspect ratio is approximate 5:1 for zone 1, 1:1 for zone 2 and 3:1 for zone 3. A single roof compartment (with the width of 11.1 m for a crest width of 1.1 m) may be used because the pillars sustaining the roof shouldn't be in the water. Those are the minimum dimensions for a FWSG, which consists of 1 train of three cells (or zones). The maximum dimension for a FWSG is 8 trains (80 meters), with 8 roof compartments (88,8 meters) width, and the length of 90 meters at a 1.1 meters crest width. On the other side, at a crest width of 1.525 meters and a trapezoidal section with slope of 45°, there are only 7 trains of 11.55 meters width each and 7 roof compartments at 13.07 meters each. In conclusion the cell length is 90-95 meters, cell width 10-11.55 meters, greenhouse compartment length is 93-98 meters (including inlet outlet structures that are not heated), greenhouse compartment width 11.1-13.07 meters.

Consequently, for 200,000 population equivalent a number of 90 FWSGs may be used. In this case it is required to split the flow to each FWSG in large inlet structures and cumulate the flows from each FWSG in large outlet structures.

The overhead mounting of the HS means that it is located as high as possible in a greenhouse in a dome type compartment (roof is cylinder) or a gable type compartment (roof is a triangular prism). The overhead mounting has the advantage of big heated surface width, which is twice the height of HS. Curtains may be used to provide heat retention. In the case the curtains are mounted gutter to gutter heaters will be positioned just below the gutter height. If the curtains are mounted truss to truss the options are at gutter height, slope-flat-slope or slope-slope. Sloped installations allow heaters to be installed above gutter level, so if curtains are used the installation options may be truss to truss, slope-flat-slope or slope-slope.

Heat loss is calculated with the formula:

$$Q_T = (Q_C + Q_A) \times f_W \qquad\qquad (W)$$

Where: $Q_T$ = total heat loss;

$Q_C$ = heat loss by conduction;
$Q_A$ = heat loss by air exchange;
$f_W$ = wind factor.

$$Q_C = U \times A \times \Delta T \qquad \text{(heat loss by conduction) (W)}$$

Were: U = heat transfer coefficient $(W/(m^2 \times °C))$;
A = exposed greenhouse surface area $(m^2)$;
$\Delta T$ = difference between inside and outside design temperature (°C)

$$Q_A = 0.373 \times \Delta T \times ((G \times NAE) + FV) \text{ (heat loss by air exchange) (W)}$$

0.373 = constant representing the heat content of the air;
$\Delta T$ = difference between inside and outside design temperature (°C);
G = greenhouse volume $(m^3)$;
NAE = number of natural air exchanges per hour;
FV = forced ventilation $(m^3/hour)$;

Total heat loss $Q_T$ is used for used for approximating the heating system (HS) requirements. Knowing the heat loss $Q_T$ (W), we can calculate the amount of total yearly thermal energy. For this we must calculate the specific heat loss rate Ps = $Q_T$ / $\Delta T$ (W/°C). After that we can calculate the total energy needed for FWSG heating system, $E_H$ = Ps$\times$24$\times$D/1000 (kWh), where D are the heating degree-days for the inside temperature calculated over a year period which starts in May at FWSG start-up.

If we add to $E_H$ the total yearly energy for digester heating, $E_D$, the total yearly energy for the cooling and ventilation system, $E_{PA}$, the total yearly energy for pretreatment, after treatment, pumping and harvesting, $E_{PH}$, we obtain the total consumed energy for a year, $E_C$.

$$E_C = E_H + E_D - E_{PA} + E_{PH} \qquad \text{(kWh)}$$

The energy contained in the hydrogen that is produced over a year period, $E_P$, is the energy produced. The difference between $E_P$ and $E_C$ is the power-plant energy $E_{PP}$. This energy divided by the number of hours in a year is the power output of the power plant $P_{PP}$ (kW). The power to area ration is the power output divided to FWSG area, p $(W/m^2)$. In the first year the HS and digester's boiler may run on methane gas converted by R, as an alternative source of energy which is required for start-up. After a year the system will reach the final power to area ratio, p, and power-plant energy. $E_{PP}$, will be converted into electric energy.

The FWSG ventilation system requirements (for square meter of the greenhouse cultivated area) are:

Summer maximum: $4.064 \times 10^{-2}$ $m^3/s/m^2$
Winter maximum: $1.016 \times 10^{-2}$ $m^3/s/m^2$
Winter minimum: $2.540 \times 10^{-3}$ $m^3/s/m^2$

The fan will be chosen in order to achieve the summer maximum.

The FWSG cooling during the summer may be achieved by installing retractable roofs or by installing evaporative pads.

The FWSG is installed in square pyramid frame with a square side to height ratio equal to 1.572. The design water level in FWSG should be situated at one third of the pyramid height, measured from the base. Consequently the part of the pyramid that corresponds to one third of the height measured from the base is situated underground. The underground pyramid is made by pipes installed by means of directional drilling. Each corner of the square has a joint structure. The reminder of the structure that is over the ground level is made by metallic profiles inserted in the four pipes filled afterwards with concrete. The top of the pyramid has also a joint structure. The digesters may also be situated inside the frame under the design water level. In this case the 7 train arrangement becomes 6 train with the middle space used for digester, reformer and hydrogen storage system. For not increasing FWSG area, in case of multiple pyramids the underground structure may be overlapped. In this case the side of the adjacent pyramids may be slightly different avoid frame intersections.

**Claims**

1.  Constructed wetland installation for treating wastewater and for producing energy, said installation comprising:

    - a primary sedimentation tank and at least one train of free surface constructed wetlands (FWSG) consisting of the following zones:
    - a first fully vegetated anaerobic zone with Eichhomia crassipes (zone 1),
    - a second open-water nitrification zone comprising the submerged macrophytes Myriophyllum spicatum which are capable of natural reaeration processes during daylight periods (zone 2), and a
    - a third vegetated denitrification and sedimentation zone with Eichhornia crassipes (zone 3) and
    - a seed retention system (SR),
    - a harvesting system (HS),
    - a digester (D),
    - a reformer (R),
    - a hydrogen storage system (HSS),
    - a boiler,
    - a greenhouse heating system (HS) and
    - a greenhouse

    whereby the hydrogen storage system is configured to supply hydrogen to the boiler, in order to heat the digester, and to the greenhouse heating system.

2.  The installation according to claim 1 whereby zone 1 has a depth of 0.43 m and zone 2 of 1.55 m and zone 3 of 0.43 m, maintained with an adjustable outlet structure, having a train width of 10-11.55 m and a train length of 90-95 m.

3.  The installation according to claim 1, whereby the seed retention system (SR) is configured to receive the water circuit outflows of the free surface constructed wetlands (FWSG), said seed retention system consisting of two cross-sectional mesh brass opening filters whereby the openings are 0,8 mm or less.

4.  The installation according to claim 1 wherein the harvesting system (HS) consists of two floatable mechanical harvesters, two hatches for each zone 1 and 3, said hatches sitting at 15-30 cm over the FWSD's design level and a mesh container for filling the two hatches, whereby the container is configured as a bascule for filling the hatches.

5.  The installation according to claim 1 wherein the anaerobic digester (D) is configured to work at a temperature of 36-38°C, is configured to provide for mixing the sludge therein and is heated by the installation's heat-exchangers which are connected to a boiler configured to run on hydrogen.

6.  The installation according to claim 5 where there are two digesters and two heat-exchangers.

7.  The installation according to claim 5 further comprising a mechanical thickener and a sludge dewatering system.

8.  The installation according to claim 1 configured to collect the biogas from digestion and to reform it in a reformer (R).

9.  Process for treating wastewater and producing energy in an installation according to any of claims 1-8 comprising the following steps:

    - starting up the collection of the wastewater in March-May, two days before new moon, from the pre-treatment stage through a pumping station or gravitationally,
    - treating the water in a three zone harvested free water surface constructed wetland with greenhouse (FWSG), with air temperatures between 13-40 °C and water temperatures between 10-32 °C, where, -in the first zone it is treated by Eichhornia crassipes in a fully vegetated zone, of which the planting began in March, in the second it is treated by Myriophyllum spicatum in an open water zone, of which the planting began in March, and in the third by Eichhornia crassipes in a fully vegetated zone,
    - the water goes further into a 0.8 mm mesh filter which has the role of retaining seeds,
    - meanwhile the 25% of the first and third zone are harvested each 29.53 days, two days before full moon, by mechanical harvesters, and along with wastewater and primary sludge, it is fed through a chopper pump or gravitationally, into a anaerobic digester, from which the biogas is reformed and stored into graphene or graphane based materials or other materials, so it can be used for heating the greenhouse with a low-intensity radiant heating system, and the digesters with a boiler, the reminder of the hydrogen produced being used for producing energy.

10. Process according to claim 9 whereby the three zones have an hydraulic retention time (HRT) at average flow of 3,924 days for zone 1 and 2.624 days for zone 2 and 2.308 days for zone 3 and one half of those values at average maximum monthly flow.

**Patentansprüche**

1. Pflanzenkläranlage Anlage mit Abwasserbehandlung und Energieerzeugung, genannt Pflanze, bestehend aus:

   - ein Vorklärbecken und mindestens ein Feuchtgebietenzug mit freien Wasseroberfläche gebaut (fWO) bestehend aus den folgenden Zonen:
   - einen ersten anaeroben Zone vollständig mit schwimmende Vegetation Eichhornia crassipes bedeckt (Zone 1),
   - einen zweiten Zone der Nitrifikation von offenen Wasser aus getauchte Makrophyten Myriophyllum spicatum, die von natürliche Belüftung Prozesse fähig sind im Laufe des Tages Perioden (Zone 2) und
   - eine dritte Zone, der Denitrifikation und Sedimentation, bedeckt mit Eichhornia Crassipes Vegetation (Zone 3) und
   - ein Saatgut Rückhaltesysteme System (SRS),
   - ein Erntesystem (ES),
   - ein Digestorium (D),
   - ein Reformation Anlage (R),
   - ein Wasserstoffspeichersystem (WSS),
   - ein Heizkraftwerk,
   - ein Heizungssystem des Gewächshaus (HSGET) und
   - ein Gewächshaus

   In welche der Wasserstoffspeichersystem so konfiguriert ist, Wasserstoff in Heizkraftwerk, bereitzustellen, um den Digestorium und den Heizsystem des Gewächshaus zu erhitzen.

2. Die Pflanze, nach Anspruch 1, in welche die Zone 1 hat eine Tiefe von 0,43 m, Zone 2 hat eine Tiefe von 1,55 mm und Zone 3 hat eine Tiefe von 0,43 m, beibehalten durch einen einstellbaren Ausgangstruktur, mit einer Stegbreite von 10-11,55 m und eine Stegbreite von 90-95 m.

3. Die Pflanze, nach Anspruch 1, wo der Saatgut Rückhaltesysteme System (SRS) ist so konfiguriert, das Fördervolumen der Pflanzenkläranlage zu erhalten (fWO), genannt Saatgut Rückhaltesysteme System bestehend aus zwei Kreuz-Sieb-Filter, aus Messing mit Öffnung des Auges von 0,8 mm oder weniger.

4. Die Pflanze, nach Anspruch 1, wo der Erntesystem (SRS) besteht aus zwei fließend mechanisierte Erntemaschinen, zwei Luken für jede Zone 1 und 3, Luken genannt, befindet am 15-30 cm über die Gestaltung der fWO und ein Grill¬Art Behälter für die Füllung der beiden Luken, wobei der Behälter als Wippe ausgebildet ist, die zwei Luken zum Befüllen.

5. Die Pflanze, nach Anspruch 1, wo der anaeroben Digestorium (D) ist so konfiguriert zum Betrieb bei einer Temperatur von 36-38°C, ist so konfiguriert, dass das Mischen des Schlammes sicherzustellen und wird durch die Wärmetauscher der Pflanze erhitzt welche an einer Heizungsanlage konfiguriert um mit Wasserstoff zu betreiben, verbunden sind.

6. Die Pflanze, nach Anspruch 5, wo zwei Digestoren und zwei Wärmetauscher sind.

7. Die Pflanze, nach Anspruch 5, die weiterhin einen mechanischen Anschlag Verdickung und Systerzventwässerung umfasst.

8. Die Pflanze, nach Anspruch 1 konfiguriert Biogas aus der Vergärung zu sammeln und das in einen Reformer (R) zu reformieren.

9. Verfahren für die Abwasserbehandlung und die Energieproduktion in einer Pflanze, in Übereinstimmung mit den Ansprüchen 1-8 umfassend die flgenden Schritten:

- Anfang der Abwassersammlung in März-Mai, zwei Tage vor dem neue Monat aus einem Vorbehandlungsschritt durch ein Pumpen oder Schwerkraft,
- Wasseraufbereitung in einer Pflanzenkläranlage, erntbar, mit freien Wasseroberfläche und Gewächshaus (fWO) mit drei Zonen, mit Temperatur der Luft zwischen 13-40 °C und Wasser zwischen 10-32 °C wo,
- in die erste Zone wird von Eichhornia crassipes behandelt in eine Zone vollständig mit schwimmenden Vegetation bedeckt deren Pflanzung im März beginnt, in die zwitte Zone wird von Myriophyllum spicatum behandelt auf einer Fläche von Freiwasser deren Pflanzung im März beginnt, und die dritte von Eichhornia crassipes in eine Zone vollständig mit schwimmenden Vegetation bedeckt,
- wonach Wasser gelangt in einen Filtersieb mit Öffnung von 0,8 mm die dazu dient Saatgut zu behalten,
- während 25% der erste und drotte Zone werden alle 29,53 Tage geerntet, zwei Tage vor dem Vollmond, von Mechanisierterntemaschinen und Pflanzen zusammen mit Abwasser und Primärschlamm sind durch eine Pumpe Schredder transportiert oder Schwerkraft zu einem anaeroben Digestorium, deren Biogas wird reformiert und in Graphen-basierten Materialien gespeichert oder Graphan oder anderen Materialien, um verwendet zu werden, um das Gewächshaus zu erwärmen, mit eine Strahlungsheizung mit niedriger Intensität und der Digestorium mit ein Heizkraftwerk, der verbleibende Wasserstoff produziert wird zur Energiegewinnung genutzt.

**10.** Prozess, nach Anspruch 9, wobei die drei Zonen ein hydraulische Verweilzeit (hVZ) haben an die mittlere Strömungs von 3,924 Tage für Zone 1 und 2,624 die mittlere Strömungs von 3,924 Tage 2 und 2,308 die mittlere Strömungs von 3,924 Tage 3 und die Hälfte dieser Werte bei der maximalen monatlichen Strömung.

## Revendications

**1.** Installation avec du coin humide, bâtie pour le traitement des eaux usées et pour la production de l'énergie, nomée installation, constituée de:

- un décanteur primaire et au moins un train de zones humides bâties avec la surface libre de l'eau (SLES) constitués des zones suivantes:

- une première zone anaérobe couverte avec de la végétation flottante de Eichhornia crassipes (zone 1);
- une zone seconde de nitrification avec de l'eau ouverte, constituée des macrofîtes immergées par le Myriophyllum spicatum, qui sont capables de procédés natures de re-aération pendant les périodes diurnes (zone 2) et
- une troisième zone de dénitrification et de sédimentation, couverte d'une végétation de Eichhornia crassipes (zone 3) et
- un système de retenue des graines (RG),
- un système de récolte (SR),
- un digesteur (D),
- un réformateur (R),
- un système de stockage de l'hydrogène (SH),
- un chauffage central,
- un système de chauffage de la serre (CS) et
- une serre

où le système de stockage de l'hydrogène est configuré de manière à fournir de l'hydrogène au chauffage central pour réchauffer le digesteur et le système de chauffage de la serre.

**2.** L'installation, en conformité avec la demande 1, là où la zone 1 a une profondeur de 0,43 m, la zone 2 a une profondeur de 1,55 mm et la zone 3 a une profondeur de 0,43 m, maintenues avec une structure réglable d'échappement, ayant une largeur du train de 10-11,55 m et une longueur du train de 90-95 m.

**3.** L'installation, en conformité avec la demande 1, où le système de retenue des graines (RG) est configuré à recevoir les débits de sortie des zones humides bâties (SLES), nommé système de retenue des graines qui est constitué de deux filtres transversaux de type tamis, en laiton avec maille de 0,8 mm ou moins.

**4.** L'installation, en conformité avec la demande 1, où le système de récolte (SR) est constitué de deux machines de récolte mécanisée flottante, deux trappes pour chaque zone 1 et 3, nommées trappes, situées à 15-30 cm au-dessus du niveau de projection de SLES et un récipient de type gril pour remplir les deux trappes, où le récipient est configuré comme bras oscillant pour remplir les deux trappes.

5. L'installation, en conformité avec la demande 1, où le digesteur anaérobe (D) est configuré à fonctionner à une température de 36-38 0 C, il est configuré à assurer le mélange de boue qui se trouve ici, et il est chauffé par les échangeurs de chaleur de l'installation qui sont reliés à un chauffage central configuré à fonctionner avec du hydrogène.

6. L'installation, en conformité avec la demande 5, où se trouvent deux digesteurs et deux échangeurs de chaleur.

7. L'installation, en conformité avec la demande 5, qui comprend aussi une station d'épaississement mécanique et un système de déshydration.

8. L'installation, en conformité avec la demande 1, configurée à collecter le biogaz de la digestion et de le réformer dans une installation de réforme (R).

9. La procédure pour le traitement des eaux usées et la production de l'énergie dans une installation, en conformité avec les demandes 1-8, est constituée des étapes suivantes:

- le commencement de la collection des eaux usées dans les mois mars-mai, deux jours avant le nouveau mois d'une étape de prétraitement à travers une station de pompage ou gravitationnellement,
- le traitement de l'eau dans une zone humide, bâtie, qui peut être récoltée, avec une surface libre de l'eau et avec de la serre (SLES) avec trois zones, avec des températures de l'air entre 13-40 °C et de l'eau entre 10-32 °C où,
- dans la première zone est traitée de Eichhornia crassipes dans une zone couverte complètement avec de la végétation flottante dont la plantation commence en mars, dans la deuxième zone, est traitée de Myriophyllum spicatum dans une zone avec de l'eau ouverte dont la plantation commence en mars, et dans la troisième de Eichhornia crassipes, dans une zone complètement couverte avec de la végétation flottante,
- et ensuite, l'eau entre dans un filtre de type tamis, avec maille de 0,8 mm qui a le rôle de retenir les graines,
- pendant que 25% de la première et de la troisième zone on les récolte chaque 29,53 jours, à deux jours avant mois plein, par les machines de récolte mécanisées et les plantes avec l'eau usée et le boue primaire sont transportés vers une pompe à découper, ou gravitationnellement vers un digesteur anaérobe, dont le biogaz est réformé et stocké dans des matériels sur la base de graphène ou graphane ou dans des autres matériels, pour l'utiliser au chauffage de la serre avec un système radiant de chauffage de basse intensité et des digesteurs avec un chauffage central, le reste de 1' hydrogène produit étant utilisé pour la production de l'énergie.

10. Processus, en conformité avec la demande 9, par laquelle les trois zones ont un temps de rétention hydraulique (TRH) au débit moyen de 3,924 jours pour la zone 1 et 2,624 jours pour la zone 2, et 2,308 jours pour la zone 3 et demi de ces valeurs au débit mensuel maximal.

Figure 1

EP 2 692 701 B1

Figure 2

Figure 3

**EP 2 692 701 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- United States Environmental Protection Agency. Manual Constructed Wetlands Treatment of Municipal Wastewaters. September 2000, 12, , 81-84